# EUROPÄISCHE PATENTSCHRIFT

(11) **EP 1 532 906 B1**
(45) Veröffentlichungstag und Bekanntmachung des Hinweises auf die Patenterteilung: **02.07.2008**
(21) Anmeldenummer: 03026884.1
(22) Anmeldetag: 24.11.2003
(51) Int. Cl.: A47J 36/24, H05B 3/82

(54) **Elektrisches Wärmgerät**
Electrical warming device
Dispositif de réchauffage à électricité

(43) Veröffentlichungstag der Anmeldung: 25.05.2005
(73) Patentinhaber: DBK David + Baader GmbH, 76870 Kandel (DE)
(72) Erfinder: Bummer, Hans-Gerd, 76870 Kandel (DE); Caspers, Michael, Dr., 69469 Weinheim (DE)
(74) Vertreter: Grünecker, Kinkeldey, Stockmair & Schwanhäusser Anwaltssozietät

(56) Entgegenhaltungen:
- EP-A- 0 573 691
- WO-A-01/80698
- DE-C- 878 990
- GB-A- 2 308 969
- US-A- 5 773 795
- US-A- 6 000 224

## Beschreibung

Die vorliegende Erfindung bezieht sich auf ein elektrisches Wärmgerät zum Erwärmen eines Behälters mittels eines Wärmeübertragungsmediums. Das Wärmgerät weist einen Becher, in den der Behälter zum Erwärmen einsetzbar ist, und eine elektrische Heizung mit mindestens einer Heizfläche zum Erwärmen des Wärmeübertragungsmediums auf.

Derartige elektrische Wärmgeräte werden heute häufig zum Erwärmen von in dem Behälter befindlicher Babykost eingesetzt. Dabei kann, wie in der DE 44 09 123 A1 gezeigt, der Becher zur Aufnahme des Wärmeübertragungsmediums einstückig aus einem wärmeleitfähigen Material gefertigt werden und mit der Heizfläche einer Heizung so in Kontakt gebracht werden, dass sich der gesamte Becher und damit das Wärmeübertragungsmedium erhitzt. Diese Lösung hat jedoch den Nachteil, dass für die Herstellung des Bechers, insbesondere bei hohen, durch die Heizfläche übertragenen Temperaturen, nur teure und sehr wärmebeständige Materialien verwendet werden können.

Alternativ ist es bekannt, derartige elektrische Wärmgeräte so auszubilden, dass der Becher Seitenwände aus Kunststoff und eine separate Bodenplatte aus einem zur Wärmeübertragung geeigneten Metall, beispielsweise Aluminium, aufweist (siehe beispielsweise US 5,773,795, EP 0 696 429 B1 oder EP 1 350 455 A2). Diese Bodenplatte wird gemäß dem Stand der Technik mit der Heizfläche eines PTC-Heizmoduls in Anlage gebracht, um das Aufheizen des Wärmeübertragungsmediums zu ermöglichen. Allerdings hat die Verwendung derartiger Bodenplatten neben einer erhöhten Komplexität und vergrößertem Montageaufwand für das Gerät den Nachteil, dass deutliche Heizenergleverluste auftreten können.

Aus der deutschen Patentschrift DE 878 990 C ist eine elektrische Heizvorrichtung mit einem becherförmigen Gefäß bekannt, dessen Seitenwand mit einem Heizkörper versehen ist, und mit einem im Stromkreis der Heizvorrichtung liegenden thermischen Schalter, der am Boden des Gefäßes angeordnet ist.

Die europäische veröffentlichte Patentanmeldung EP 0573 691 A1 offenbart einen PTC-Heizkörper mit einem Hohlkörper-Strangpressprofil aus Metall, vorzugsweise Aluminium, und mit einem in den Hohlkörper durch Zusammenquetschen der Schmalseiten eingepressten PTC-Element, wobei die Schmalseiten nach außen gekrümmte Abschnitte aufweisen. Die Schmalseiten weisen einen auf der Grundfläche des Strangpressprofils senkrecht stehenden Steg auf, an den sich ein etwa U-förmig bis halbkreisförmig ausgebildeter gekrümmter Abschnitt anschließt.

Die britische Patentanmeldung GB 2 308 969 A zeigt einen portablen Babyflaschenwärmer, bei dem in einer doppellagigen Seitenwandung ein elektrischer Heizdraht eingelassen ist.

Aus der veröffentlichten internationalen Patentanmeldung WO 01/80698 A1 ist ein elektrischer Wasserkocher bekannt, bei dem ein Kunststoffgehäuse vorgesehen ist, in welches, wie insbesondere aus der Figur 12 mit der zugehörigen Beschreibung auf Seite 17 erkennbar ist, eine Aluminiumplatte mit eingegossenen Heizelementen als Boden des Teekessels eingesetzt ist.

Es liegt der vorliegenden Erfindung die Aufgabe zugrunde, ein verbessertes verlustarmes Wärmgerät anzugeben, welches effizient und kostengünstig herstellbar ist und eine schnelle Aufheizung des Wärmeübertragungsmediums ermöglicht.

Diese Aufgabe wird erfindungsgemäß von einem elektrischen Wärmgerät mit den Merkmalen des Patentanspruchs 1 gelöst. Bei diesem Wärmgerät ist die Becherwandung wenigstens teilweise direkt durch die Heizfläche der Heizung gebildet. Dies bedeutet eine besonders unmittelbare Wärmekopplung zwischen dem Wärmeübertragungsmedium und der elektrischen Heizung, so dass Verluste weitestgehend vermieden werden können und die Aufheizzeiten wesentlich reduziert werden. Montageaufwand und Materialkosten für eine zusätzliche wärmeleitfähige Bodenplatte entfallen. Der übrige Teil der Becherwandung schließlich kann aus weniger teuren Materialien gefertigt werden.

Vorteilhafte Weiterbildungen der vorliegenden Erfindung sind Gegenstand mehrerer Unteransprüche.

Gemäß einer vorteilhaften Weiterbildung ist der Verbindungsbereich zwischen der Heizung und der Becherwandung mit einer Dichtung, die vorzugsweise aus Silikon besteht, abgedichtet. Alternativ kann auch ein Fluorkautschuk verwendet werden. Diese Dichtung erfüllt mehrere Aufgaben: Zum einen verhindert sie das Eindringen von Feuchtigkeit aus dem Becherinnenraum in Elektronikkomponenten im Inneren des Gehäuses. Zum anderen entkoppelt die Dichtung die Becherwandung thermisch von der Heizfläche der Heizung. Hierzu sollte die Dichtung einerseits aus einem hoch wärmebeständigem Material bestehen, andererseits aber ausreichend Masse besitzen, um die nötige Entkopplung zu bewirken. Eine Dicke von 2 bis 15 mm ermöglicht hier die ausreichende Distanz zwischen der Heizfläche und der übrigen Becherwandung.

Eine oder mehrere umlaufende Dichtlippen, die an der Dichtung vorgesehen sein können, erhöhen die Dichtigkeit der Abdichtung gegenüber der Heizung und/oder dem Becher bei gleichem Anpressdruck.

Die Heizfläche der elektrischen Heizung bildet einen Teil des Becherbodens. Diese Lösung ist besonders wenn als Wärmeübertragungsmedium Wasserdampf verwendet wird, weil sich hier die kondensierende Flüssigkeit hauptsächlich am Becherboden sammelt.

Die vorteilhaften Eigenschaften des erfindungsgemäßen Wärmgeräts kommen besonders dann zum Tragen, wenn die Heizung ein PTC-Heizmodul umfasst. Die direkte thermische Kopplung des PTC-Heizmoduls mit dem Wärmeübertragungsmedium ermöglicht eine besonders rasche und verlustarme Aufheizung.

Das PTC-Heizmodul weist ein PTC-Widerstandselement auf, das wenigstens teilweise in einem wärmeleitfähigen Gehäuse aufgenommen ist, wobei die Heizfläche durch mindestens einen Teil des wärmeleitfähigen Gehäuses gebildet ist. Derartige PTC-Heizmodule sind weit verbreitet und können mit ihrem meist aus Aluminium bestehenden Gehäuse auf besonders einfache Weise in das erfindungsgemäße elektrische Wärmgerät eingebaut werden.

Als besonders preisgünstiges Massenproduktionsteil wird das Gehäuse des PTC-Heizmoduls als Strangpressprofil, vorzugsweise aus Aluminium, hergestellt.

In Anpassung an die handelsübliche Ausgestaltung weit verbreiteter Heizelemente kann die Becherwandung eine rechteckförmige Öffnung aufweisen, durch welche hindurch die Heizfläche der elektrischen Heizung mit dem Wärmeübertragungsmedium in Kontakt bringbar ist. Selbstverständlich sind aber auch kreisförmige oder andersartig ausgestaltete Formen dieser Öffnung möglich.

Um Kosten und Gewicht zu sparen, kann die Becherwandung aus einem Kunststoff, beispielsweise Polypropylen (PP) oder Polyamid (PA), hergestellt sein.

Die erfindungsgemäße Integration der Heizfläche in die Becherwandung des Wärmgerätes führt besonders dann zu einer effektiven Ausnützung der elektrischen Energie, wenn die Becherwände zusammen mit dem Behälter und/oder einer zusätzlichen Abdeckung eine im wesentlichen geschlossene Kammer zum Zurückhalten von Wasserdampf bilden, so dass als Wärmeübertragungsmedium nicht flüssiges Wasser, sondern Wasserdampf eingesetzt wird.

Anhand der in den beiliegenden Zeichnungen dargestellten Ausgestaltungen wird die Erfindung im folgenden näher erläutert. Ähnliche oder korrespondierende Einzelheiten sind in den Figuren mit denselben Bezugszeichen versehen. Es zeigen:
- **Figur 1**: eine perspektifische Explosionsdarstellung des elektrischen Wärmgeräts gemäß einer vorteilhaften Ausführungsform;
- **Figur 2**: eine Seitenansicht des elektrischen Wärmgeräts aus Figur 1;
- **Figur 3**: eine Draufsicht auf das Wärmgerät der Figur 1;
- **Figur 4**: ein Schnittbild des Wärmgeräts aus Figur 1 entlang der Schnittlinie B-B;
- **Figur 5**: ein Schnittbild des Wärmgeräts aus Figur 1 entlang der Schnittlinie A-A der Figur 3;
- **Figur 6**: einen Schnitt durch den elektrischen Wärmer mit eingestellter Babyflasche in betriebsbereitem Zustand.

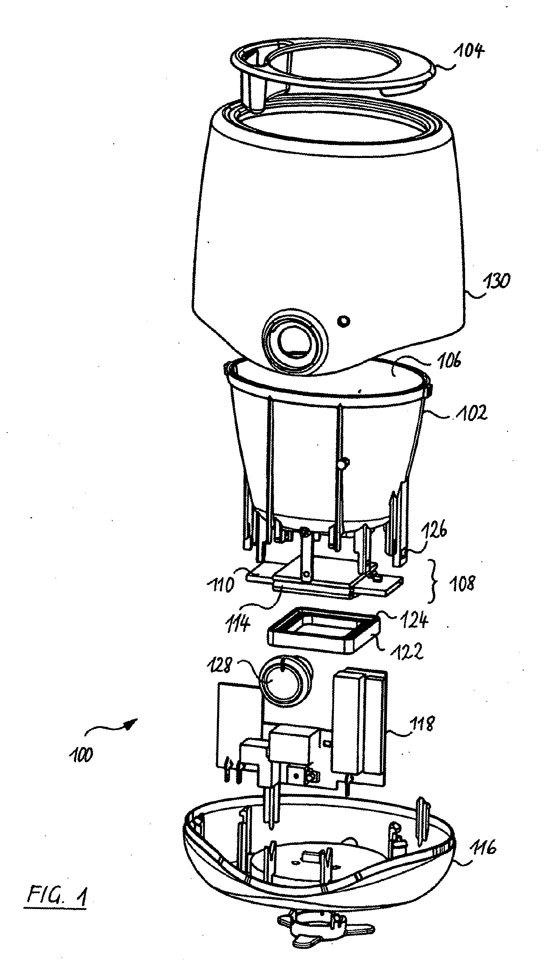

Figur 1 zeigt in einer perspektivischen Explosionsdarstellung ein erfindungsgemäßes Wärmgerät 100 gemäß einer möglichen Ausführungsform. Gemäß dieser Ausführungsform handelt es sich bei dem Wärmgerät 100 um einen Babykostwärmer, bei dem im Inneren eines Bechers 102 Wasser verdampft wird, um eine eingestellte Babymilchflasche oder ein Fertigkostgläschen zu erwärmen. Eine Abdeckung 104 füllt den Freiraum zwischen der Becherwandung 106 und dem eingestellten Behälter, so dass der Wasserdampf zurückgehalten wird.

Erfindungsgemäß erfolgt die elektrische Aufheizung über ein PTC-Heizmodul 108. Dieses PTC-Heizmodul 108 weist ein meist keramisches PTC-Widerstandselement 110 auf. Bei diesem handelsüblichen PTC-Heizmodul 108 erfolgt die eigentliche Wärmeabgabe über eine Heizfläche 112, die Teil des als Strangpressprofil hergestellten wärmeleitfähigen Gehäuses 114 ist.

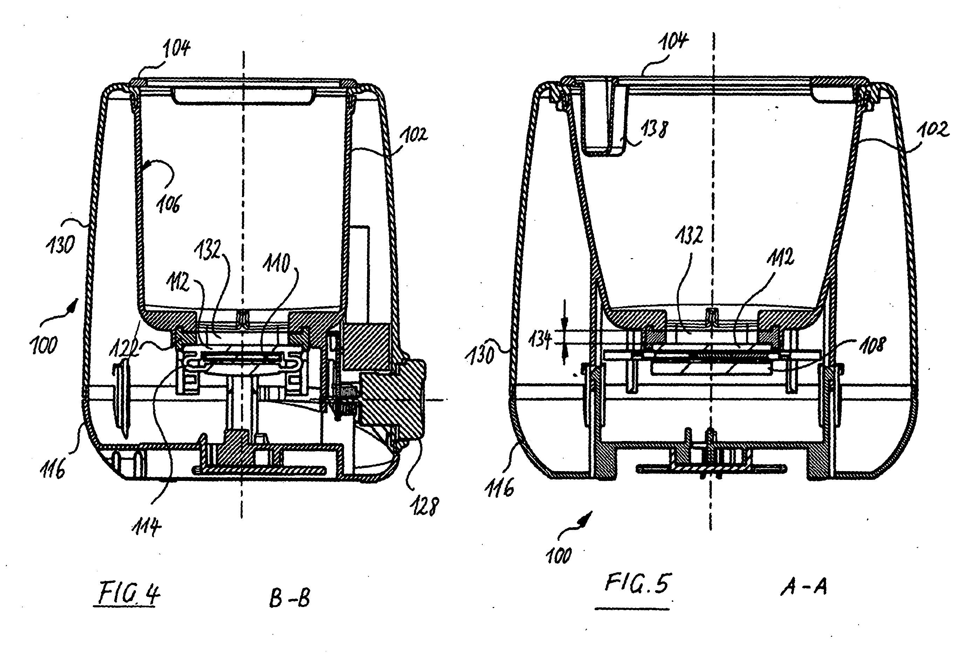

Erfindungsgemäß steht die Heizfläche 112 durch eine in dem Becher 102 vorgesehene Öffnung, die aus den Figuren 4 und 5 noch deutlich wird, in direktem thermischen Kontakt zu dem Wärmeübertragungsmedium. Im vorliegenden Fall handelt es sich bei dem Wärmeübertragungsmedium um eine geringe Menge Wasser, die im direkten Kontakt mit der Heizfläche 112 verdampft wird. Zur elektrischen Ansteuerung des PTC-Heizmoduls 108 ist in dem Gehäuse 116 des Wärmgeräts 100 eine Elektronikbaugruppe 118 angeordnet. Elektrische Anschlüsse sorgen für die benötigte elektrische Kontaktierung zwischen dem Heizmodul 108 und der Elektronikbaugruppe 118.

Um einerseits ein Eindringen von Feuchtigkeit in den unteren Gehäusebereich 116 zu verhindern und andererseits den Becher 102 thermisch von der Heizfläche 112 zu entkoppeln, ist eine Dichtung 122 vorgesehen. Diese Dichtung, die zur ausreichenden thermischen Kopplung eine vergleichsweise große Dicke aufweisen muss, ist mit einer Vielzahl von Dichtlippen 124 sowohl zum Becher 102 wie auch zur Heizung 108 hin ausgestattet, die für eine zuverlässige Abdichtung gegen das Eindringen von Wasser und Wasserdampf sorgen.

Bei der Montage des Wärmgeräts 100 verrastet der Gehäuseboden 106 über verschiedene Rastvorrichtungen 126 mit dem Becher 102. Bei ausreichendem Anpressdruck stellt dann die Dichtung 122 die erforderliche Wärmeentkopplung und Dichtigkeit sicher. Somit kann bei der Herstellung des Bechers 102 auf die Verwendung hoch wärmebeständiger Materialien gänzlich verzichtet werden. Der Becher 102 kann beispielsweise aus Polypropylen oder Polyamid gefertigt werden.

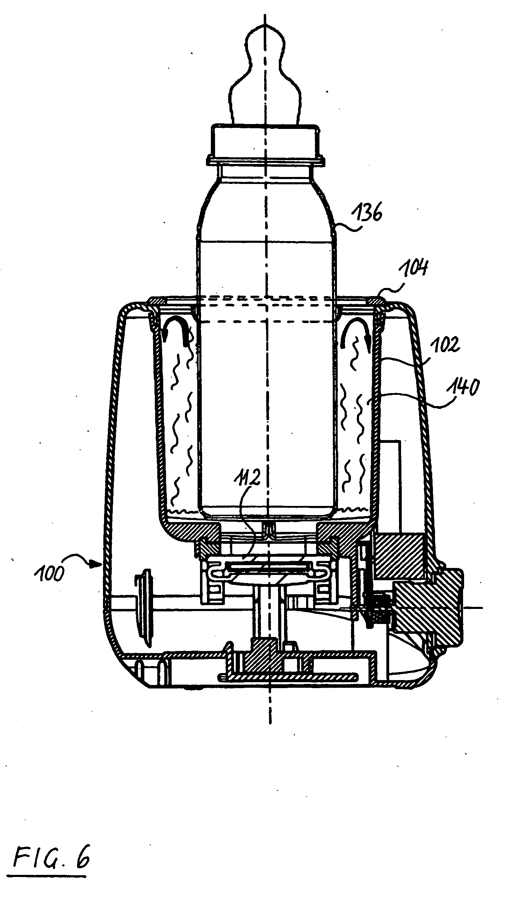

Dadurch, dass in der gezeigten Ausführungsform die Erwärmung eines in das Wärmgerät 100 eingestellten Behälters 136 (siehe hierzu Figur 6) über dampfförmiges Wasser erfolgt, das nach Abschalten der Heizleistung rasch kondensiert und somit eine weitere Erwärmung unterbricht, kann die Einstellung einer gewünschten Temperatur, die von dem Bediener über den Betätigungsdrehknopf 128 vorgenommen wird, auch über einen einfachen Timer, der entsprechend kalibriert wurde, erfolgen. Dies vereinfacht die Gestaltung der Elektronikbaugruppe 118 erheblich. Alternativ können selbstverständlich auch Temperatursensoren zur Steuerung des Wärmgeräts 100 verwendet werden. Eine äußere Hülle 130 komplettiert das Gehäuse 116.

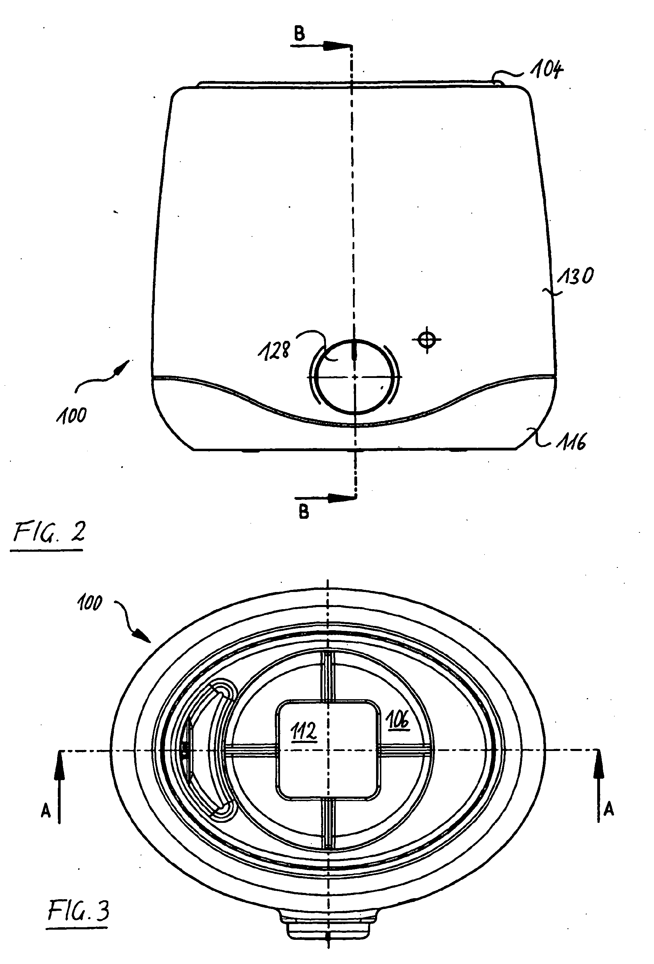

Figur 2 zeigt das Wärmgerät 100 im montierten Zustand. Die beiden Gehäuseteile 116 und 130 sind verrastet. Über den Drehknopf 128 kann von einem Bediener die gewünschte Temperatur, beispielsweise über einen Timer eingestellt werden. Die Abdeckung 104 ist eingelegt.

Eine Ansicht von oben auf das Wärmgerät 100 der Figur 2 ist in Figur 3 dargestellt. Erfindungsgemäß bildet die Heizfläche 112 unmittelbar einen Teil der Becherwandung 106.

Mit Bezug auf die Schnittbilder der Figuren 4 und 5 soll die erfindungsgemäße Anordnung des Heizmoduls 108 im folgenden näher erläutert werden. Erfindungsgemäß ist bei dem dargestellten Wärmgerät 100 das PTC-Heizmodul 108 so montiert, dass die Heizfläche 112 einen Teil der Wandung 106 des Bechers 102, in den, wie in Figur 6 gezeigt, ein zu erwärmender Behälter 136 eingestellt werden kann, bildet. Dabei wird die Heizfläche 112 bei dem gezeigten Heizmodul 108 durch einen Teil des wärmeleitfähigen Gehäuses 114 gebildet. Die eigentliche Erwärmung über Zufuhr von elektrischer Energie erfolgt durch ein in das Gehäuse 114 eingebettetes PTC-Widerstandselement 110.

Die Heizfläche 112 ist mit dem Innenraum des Bechers 102 durch eine Öffnung 132, die in den Becher 102 vorgesehen ist, in Kontakt. Die Dichtung 122 sorgt zum einen für eine ausreichende Wärmeentkopplung zwischen dem Heizmodul 108 und dem Becher 102. Andererseits verhindert die Dichtung 122 ein Eindringen von Wasser oder Wasserdampf aus dem Becherinnenraum in das Gehäuse 116, 130. Dichtlippen 124 können sowohl zum Becher 102 wie auch zur Heizfläche 112 hin für eine noch zuverlässigere Abdichtung sorgen. Die Dichtung 122 ist geometrisch so gestaltet, dass sie einerseits in eine entsprechende Nut an dem Becher 102 eingelegt werden kann, und andererseits das PTC-Heizmodul 108 von einem der Dichtung vorgesehenen umlaufenden Vorsprung aufnehmbar ist. Auf diese Weise sind die Elemente Becher 102, Dichtung 122 und Heizmodul 108 gegen ein seitliches Verrutschen gesichert. Um den hohen Anforderungen bei thermischer Belastung zu genügen (die Heizfläche 112 kann im Betrieb Temperaturen von bis zu 200 bis 240° C annehmen) muss die Dichtung aus einem hochwärmebeständigen Material gefertigt werden. Dies kann beispielsweise Silikon oder aber ein Fluorkautschuk sein. Darüber hinaus sollte die Dichtung eine ausreichende Dicke 134 aufweisen, damit eine ausreichende thermische Entkopplung zwischen der Heizfläche 112 und dem Becher 102 sichergestellt ist. Die entsprechende Dicke 134 kann in Größenordnungen von 2 bis 15 mm liegen.

In Figur 6 ist das erfindungsgemäße Wärmgerät gemäß der Darstellung aus Figur 4 nochmals in betriebsbereitem Zustand mit eingesetztem Behälter 136, hier einer Babyflasche, gezeigt. In der gezeigten Ausführungsform wird nur ein geringes Wasservolumen, entsprechend dem Volumen des Messbechers 138 aus Figur 5, in den Becher 102 eingefüllt und verdampft bei Wärmezufuhr durch das PTC-Heizelement 108. Der aufsteigende Wasserdampf 140 streicht an dem Behälter 136 vorbei und erwärmt dessen Inhalt. Die Abdeckung 104 hält den Wasserdampf zurück, der hier kondensiert und nach unten zum Becherboden hin zurückströmt um von dort erneut auf der Heizfläche 112 zu verdampfen.

Obwohl die beigefügten Figuren als ein mögliches Ausführungsbeispiel lediglich einen Babykostwärmer zum Erwärmen eines Behälters mittels Wasserdampf als Wärmeübertragungsmedium zeigen, sind selbstverständlich verschiedene Modifikationen der vorliegenden Erfindung möglich.

Zunächst kann durch Vorsehen einer entsprechenden Abdeckhaube das vorliegende Gerät zum Sterilisieren in den verschiedensten Anwendungsbereichen, wie z. B. zum Sterilisieren von Babykostbehältern, aber auch von anderen Objekten im medizinischen Bereich, eingesetzt werden. Des weiteren lässt sich die Anordnung selbstverständlich auch für Randfüllungen, d. h. einen vollständig mit Wasser gefüllten Becher 102, einsetzen. Selbstverständlich könnte die Heizung sich auch an einer anderen Stelle wie in den Ansprüchen definiert des Bechers befinden.

## Patentansprüche

1. Elektrisches Wärmgerät zum Erwärmen eines Behälters (136) mittels eines Wärmeübertragungsmediums, wobei das Wärmgerät (100) einen Becher (102), in den der Behälter (136) zum Erwärmen einsetzbar ist, und eine elektrische Heizung (108) mit mindestens einer Heizfläche (112) zum Erwärmen des Wärmeübertragungsmediums aufweist, wobei die Becherwandung (106) wenigstens teilweise durch die Heizfläche (112) der Heizung (108) gebildet ist,
**dadurch gekennzeichnet,**
**dass** die Heizfläche (112) der elektrischen Heizung (108) einen Teil des Becherbodens, und weiterhin einen Teil eines wärmeleitfähigen Gehäuses (114) der Heizung (108) bildet, wobei die Heizung ein PTC-Widerstandselement (110) aufweist, das wenigstens teilweise in dem wärmeleitfähigen Gehäuse (114) aufgenommen ist.

2. Elektrisches Wärmgerät nach Anspruch 1, **dadurch gekennzeichnet, dass** ein Verbindungsbereich zwischen der Heizung (108) und der Becherwandung (106) mit einer Dichtung (122), vorzugsweise aus Silikon, abgedichtet ist.

3. Elektrisches Wärmgerät nach Anspruch 2, **dadurch gekennzeichnet, dass** die Dichtung (122) eine Dicke (134) von 2 bis 15 mm hat.

4. Elektrisches Wärmgerät nach Anspruch 2 oder 3, **dadurch gekennzeichnet, dass** die Dichtung (122) mindestens eine umlaufende Dichtlippe (124) aufweist.

5. Elektrisches Wärmgerät nach Anspruch 4, **dadurch gekennzeichnet, dass** das wärmeleitfähige Gehäuse (114) ein Strangpressprofil, vorzugsweise aus Aluminium, ist.

6. Elektrisches Wärmgerät nach einem der Ansprüche 1 bis 5, **dadurch gekennzeichnet, dass** die Becherwandung (106) eine rechteckförmige Öffnung (132) aufweist, durch welche hindurch die Heizfläche (112) der elektrischen Heizung (108) mit dem Wärmeübertragungsmedium in Kontakt bringbar ist.

7. Elektrisches Wärmgerät nach einem der Ansprüche 1 bis 6, **dadurch gekennzeichnet, dass** die Becherwandung (106) aus einem Kunststoff, vorzugsweise Polypropylen oder Polyamid, hergestellt ist.

8. Elektrisches Wärmgerät nach einem der Ansprüche 1 bis 7, **dadurch gekennzeichnet, dass** an dem Becher (102) mindestens eine Rastvorrichtung (126) angeordnet ist, die so mit einem Gehäuse (116) des Wärmgeräts (100) zusammenwirkt, das die Dichtung (122) zwischen der Heizung (108) und dem Becher (102) zusammengepresst ist.

9. Elektrisches Wärmgerät nach einem der Ansprüche 1 bis 8, **dadurch gekennzeichnet, dass** die Becherwände zusammen mit dem Behälter (136) und/oder einer Abdeckung (104) eine im Wesentlichen geschlossene Kammer zum Zurückhalten von Wasserdampf bilden.

## Claims

1. Electric warming device for heating a container (136) by means of a heat transfer medium, wherein the warming device (100) comprises a beaker (102) into which the Container (136) is insertable for heating, and an electric heater (108) having at least one heating surface (112) for heating the heat transfer medium, the beaker wall (106) being formed at least in part by the heating surface (112) of the heater (108), **characterised in that** the heating surface (112) of the electric heater (108) forms part of the beaker base and additionally part of a heat-conductive housing (114) of the heater (108), the heater having a PTC resistor element (110), which is at least partly received in the heat-conductive housing (114).

2. Electric warming device according to claim 1, **characterised in that** a connecting region between the heater (108) and the beaker wall (106) is sealed with a seal (122), preferably composed of silicone.

3. Electric warming device according to claim 2, **characterised in that** the sea! (122) has a thickness (134) of 2 to 15 mm.

4. Electric warming device according to claim 2 or 3, **characterised in that** the seal (122) has at least one continuous sealing lip (124).

5. Electric warming device according to one of the claims 1 to 4, **characterised in that** the heat-conductive housing (114) is an extruded profile, preferably composed of aluminium.

6. Electric warming device according to one of the claims 1 to 5, **characterised in that** the beaker wall (106) has a rectangular aperture (132) through which the heating surface (112) of the electric heater (108) may be brought into contact with the heat transfer medium.

7. Electric warming device according to one of the claims 1 to 6, **characterised in that** the beaker wall (106) is manufactured from a plastics material, preferably polypropylene or polyamide.

8. Electric warming device according to one of the claims 1 to 7, **characterised in that** on the beaker (102) at least one catch device (126) is disposed, which so cooperates with a housing (116) of the warming device (100) that the seal (122) is squeezed between the heater (108) and the beaker (102).

9. Electric warming device according to one of the claims 1 to 8, **characterised in that** the beaker walls together with the container (136) and/or a cover (104) form a substantially closed chamber for retaining water vapour.

## Revendications

1. Appareil de chaleur électrique pour le réchauffage d'un récipient (136) à l'aide d'un fluide caloporteur, dans lequel l'appareil de chaleur (100) comporte une cuvette (102) dans laquelle le récipient (136) peut être introduit pour le réchauffage, et un dispositif de chauffage électrique (108) avec au moins une surface de chauffe (112) pour le réchauffage du fluide caloporteur, dans lequel la paroi de la cuvette (106) est formée au moins partiellement par la surface de chauffe (112) du dispositif de chauffage (108),
**caractérisé en ce que**
la surface de chauffe (112) du dispositif de chauffage (108) constitue une partie du fond de la cuvette et également une partie d'un boîtier thermo-conducteur (114) du dispositif de chauffage (108), dans lequel le dispositif de chauffage comporte une résistance PTC (110) qui est logée au moins partiellement dans le boîtier thermo-conducteur (114).

2. Appareil de chaleur électrique selon la revendication 1, **caractérisé en ce qu'**une zone de liaison entre le dispositif de chauffage (108) et la paroi de la cuvette (106) est étanchée avec une garniture d'étanchéité (122), de préférence en silicone.

3. Appareil de chaleur électrique selon la revendication 2, **caractérisé en ce que** la garniture d'étanchéité (122) a une épaisseur (134) comprise entre 2 mm et 15 mm.

4. Appareil de chaleur électrique selon la revendication 2 ou 3, **caractérisé en ce que** la garniture d'étanchéité (122) comprend au moins une lèvre d'étanchéité circulaire (124).

5. Appareil de chaleur électrique selon l'une quelconque des revendications 1 à 4, **caractérisé en ce que** le boîtier thermo-conducteur (114) est un profilé extrudé, de préférence en aluminium.

6. Appareil de chaleur électrique selon l'une quelconque des revendications 1 à 5, **caractérisé en ce que** la paroi de la cuvette (106) comporte une ouverture rectangulaire (132) à travers laquelle la surface de chauffe (112) du dispositif de chauffage (108) peut être mise en contact avec le fluide caloporteur.

7. Appareil de chaleur électrique selon l'une quelconque des revendications 1 à 6, **caractérisé en ce que** la paroi de la cuvette (106) est constituée d'une matière plastique, de préférence du polypropylène ou du polyamide.

8. Appareil de chaleur électrique selon l'une quelconque des revendications 1 à 7, **caractérisé en ce qu'**au moins un dispositif d'encliquetage (126), qui coopère avec un boîtier (116) de l'appareil de chaleur (100) de telle manière que la garniture d'étanchéité (122) est comprimée entre le dispositif de chauffage (108) et la cuvette (102), est disposé sur la cuvette (102).

9. Appareil de chaleur électrique selon l'une quelconque des revendications 1 à 8, **caractérisé en ce que** les parois de la cuvette, conjointement avec le récipient (136) et/ou un couvercle (104), forment une chambre sensiblement fermée pour la retenue de la vapeur d'eau.
